# EUROPÄISCHE PATENTSCHRIFT

(11) **EP 2 580 038 B1**
(45) Veröffentlichungstag und Bekanntmachung des Hinweises auf die Patenterteilung: **29.06.2016**
(21) Anmeldenummer: 11719202.1
(22) Anmeldetag: 12.05.2011
(51) Int. Cl.: B29B 11/16, B29C 70/54

(54) **VERFAHREN UND UMFORMWERKZEUG ZUM HERSTELLEN EINES FASERVERBUNG-VORFORMLINGS**
METHOD AND FORMING TOOL FOR PRODUCING A FIBRE COMPOSITE PREFORM
PROCÉDÉ ET OUTIL DE FORMAGE POUR LA RÉALISATION D'UNE PRÉFORME EN MATÉRIAU COMPOSITE À FIBRES

(30) Priorität: 14.06.2010 DE 102010030009
(43) Veröffentlichungstag der Anmeldung: 17.04.2013
(73) Patentinhaber: Bayerische Motoren Werke Aktiengesellschaft, 80809 München (DE)
(72) Erfinder: THEINERT, Jörg, 84051 Ohu (DE); MAI, Horst, 84095 Furth (DE)
(86) Internationale Anmeldenummer: PCT/EP2011/002347
(87) Internationale Veröffentlichungsnummer: WO 2011/157330

(56) Entgegenhaltungen:
- EP-A1- 1 097 794
- FR-A1- 2 669 572
- JP-A- 4 369 512

## Beschreibung

Die Erfindung bezieht sich auf ein Verfahren und Formwerkzeug zum Herstellen eines mehrdimensional profilierten Vorformlings aus einem vorimprägnierten oder bindemittelvernetzten, multidirektionalen Faserverbundmaterial, nach dem Oberbegriff des Patentanspruchs 1 bzw. 2.

Aus der EP 1 097 794 A1 ist ein Formwerkzeug zum Herstellen eines Formteils aus einem im Wesentlichen flächigen, thermoplastischen Halbzeug bekannt, bei dem das Halbzeug randseitig der Formkavität zwischen dem Oberwerkzeug und mehreren, von unten federnd gegen das Oberwerkzeug angedrückten Verschlussteilen eingespannt wird und die Verschlussteile temperiert werden, um so das Nachziehen des thermoplastischen Halbzeugs in der Umformphase zu erleichtern.

Ferner offenbart die JP 4 369512 A1 ein Formwerkzeug für Glasfasermatten mit einem an das Oberwerkzeug angrenzenden, federbelasteten Rahmenteil, welches mit einer nach unten gerichteten Stachelkrone bestückt ist, die die Fasermatte beim Schließen des Werkzeugs zusammen mit einem korrespondierenden Stachelbesatz an einem unteren, die Formfläche des unteren Werkzeugteils umgreifenden Stützrahmen durchdringt und so die Fasermatte in der Umformphase in Nachzugsrichtung verschiebefest einspannt, so dass die Längenunterschiede der Fasermatte zwischen dem unverformten und dem an das Formspaltprofil angepassten Zustand durch eine entsprechende Längendehnung der Fasermatte in den Grenzen des von den beiden Rahmenteilen umschlossenen Mattenbereichs ausgeglichen werden.

Bei der Herstellung von mehrdimensionalen Vorformlingen aus Faserverbundmaterial jedoch, welches zwar flexibel, in Faserrichtung aber zugstabil ist, kommt es beim Umformprozess in einem Formwerkzeug zwischen den Bereichen höherer gegenüber denjenigen geringerer Umformung zu Materialverwerfungen, die nicht mehr durch eine Materialdehnung ausgeglichen werden können und sich dann in einer Falten- oder einer anderen Fehlstellenbildung des Vorformlings niederschlagen.

Demgegenüber ist es Aufgabe der vorliegenden Erfindung, ein Verfahren und ein Umformwerkzeug der eingangs genannten Art so auszubilden, dass die entstehenden Vorformlinge eine deutlich erhöhte Fertigungsqualität besitzen.

Diese Aufgabe wird erfindungsgemäß durch ein Verfahren und ein Umformwerkzeug nach den Ansprüchen 1 und 2 gelöst.

Nach der Erfindung (Ansprüche 1 bzw. 2) werden die Profillängenunterschiede des Formspalts während der Umformphase des Faserverbundmaterials dadurch weitgehend ausgeglichen, dass das Faserverbundmaterial im Bereich des späteren Randbeschnitts des Vorformlings zwischen Spannrahmen und Formspalt an den Stellen geringerer Profillänge in einem Durchzugsspalt zunehmend sickenförmig gerafft wird, mit dem Ergebnis, dass die Zugspannung des Faserverbundmaterials im Formspalt und die Materialnachführung längs des Spannrahmens während des Umformvorgangs stark vergleichmäßigt und selbst bei komplexen Formteilgeometrien auf fertigungstechnisch einfache Weise eine signifikant verbesserte Materialanformung an die Formspaltkontur ohne störende Materialverwerfungen und insbesondere Faltenbildungen erreicht wird.

Vorzugsweise ist die Durchzugslänge und damit der Materialverbrauch im Durchzugsspalt gemäß Anspruch 3 nicht konstant, sondern ändert sich quer zur Durchzugsrichtung nach Maßgabe der örtlichen Profillängenunterschiede, wodurch sich die Materialangleichung an die Formspaltgeometrie weiter wesentlich verbessern lässt.

Um auf einfache Weise sicherzustellen, dass der Materialverbrauch im Durchzugsspalt durch überschüssiges Material von Seiten des Formspalts der Werkzeugteile und nicht durch spannrahmenseitig nachgezogenes Faserverbundmaterial gedeckt wird, empfiehlt es sich nach Anspruch 4, das Faserverbundmaterial im Durchzugsspalt mit einer ungleichförmigen, im spannrahmenseitigen Einlaufbereich größeren Rückhaltekraft als im Auslaufbereich zu beaufschlagen.

Die Erfindung wird nunmehr anhand eines Ausführungsbeispiels in Verbindung mit den Zeichnungen näher erläutert. Es zeigen in stark schematisierter Darstellung:
- **Fig. 1a, b**: eine teilweise geschnittene Ansicht eines Umformwerkzeugs nach der Erfindung zur Herstellung eines Faserverbund-Vorformlings in der Öffnungslage (a) und in der Endphase des Umformvorgangs (b);
- **Fig. 2**: die Aufsicht auf das Werkzeugunterteil gemäß Fig. 1 in verkleinertem Maßstab;
- **Fig. 3**: einen Schnitt längs der Linie III-III der Fig. 2; und
- **Fig. 4**: einen erfindungsgemäß hergestellten, nicht-abwickelbar profilierten Faserverbund-Vorformling in perspektivischer Darstellung.

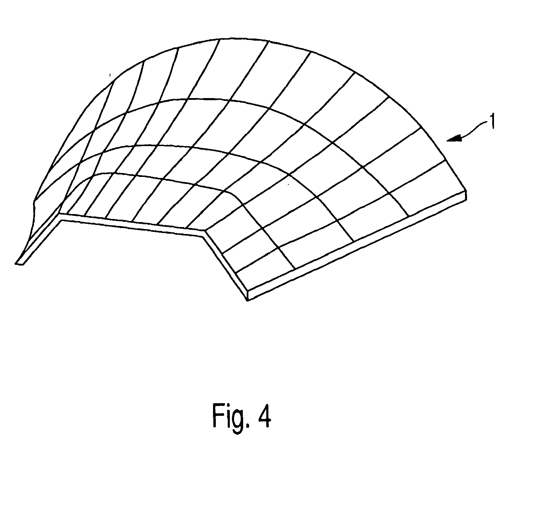

Das in den Fign. gezeigte Umformwerkzeug dient zur Herstellung eines dreidimensional nicht-abwickelbar profilierten Vorformlings, etwa des in Fig. 4 dargestellten Übergangsstücks 1, aber auch einer gesamten Kraftfahrzeug-Bodenstruktur, aus einer vorimprägnierten oder bindemittelvernetzten, multidirektional aus einer Vielzahl von übereinander geschichteten Faserlagen aufgebauten Fasermatte 2 und enthält als Hauptbestandteile ein oberes und ein unteres, in der Schließlage einen der Raumform des herzustellenden Vorformlings 1 entsprechenden Formspalt 3 begrenzendes Werkzeugteil 4, 5 sowie einen die Werkzeugteile 4, 5 umgreifenden Spannrahmen 6, an dem die zunächst noch ebene Fasermatte 2 in der Öffnungslage der Werkzeugteile 4, 5 derart festgespannt wird, dass sie dann beim Schließhub des Werkzeugs mit einer definierten Zugspannung in den Formspalt 3 nachgezogen wird.

Der Spannrahmen 6 ist zweiteilig mit einem oberen und einem unteren Rahmenteil 6.1, 6.2 ausgebildet, die jeweils federnd durch eine Schrauben- oder Gasdruckfeder 7.1, 7.2 aufeinander gedrückt sind. Im oberen Rahmenteil 6.1 ist eine in Rahmenlängsrichtung verlaufende Klemmleiste 8 eingesetzt, welche mit einer korrespondierenden Hohlkehle 9 im unteren Rahmenteil 6.2 zusammenwirkt und in einzelne Klemmleistenstücke unterteilt ist, welche jeweils individuell höhenverstellbar am Rahmenteil 6.1 befestigt sind, so dass sich die Klemmspannung und demzufolge die auf die Fasermatte 2 ausgeübte Rückhaltekraft am Spannrahmen 6 örtlich unterschiedlich einstellen lässt.

Beim Schließhub des Umformwerkzeugs wird der Spannrahmen 6 gemeinsam mit dem oberen Werkzeugteil 4 abgesenkt, bis seine Spannfläche unter die Einlauffläche 10 des unteren Werkzeugteils 5 gelangt, so dass das in der Umformphase von Seiten des Spannrahmens 6 nachfließende Fasermaterial 2 über die dann als Ziehkante 11 wirkende Außenkante des unteren Werkzeugteils 5 gezogen und an dieser kurz vor dem Einlaufen in den Formspalt 3 geglättet wird. Im Spannrahmen 6 sind ferner Heizelemente 12 integriert, durch die das bindemittelvernetzte oder vorimprägnierte Fasermaterial 2 auf Geliertemperatur gehalten wird, um so ein ruckfreies Nachziehen des Fasermaterials 2 sicherzustellen.

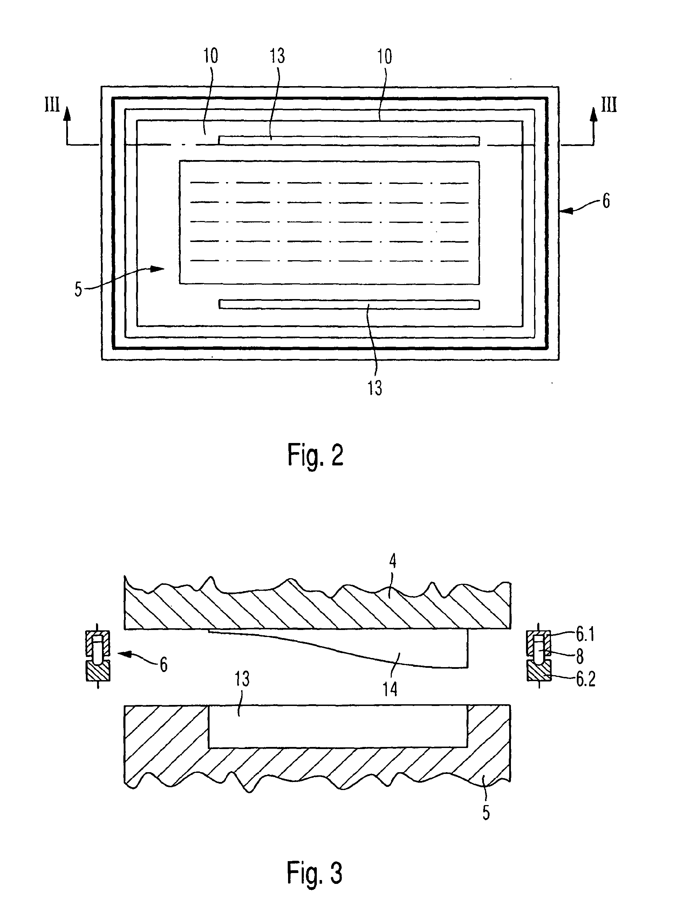

Nach einem weiteren wesentlichen Aspekt des gezeigten Umformwerkzeugs wird der Materialfluss in den Formspalt 3 an die unterschiedlichen Profillängen des Vorformlings 1 angepasst. Zu diesem Zweck ist im Bereich des späteren Randbeschnitts des Vorformlings 1 zwischen Formspalt 3 und Spannrahmen 6 eine Nut 13 im unteren und eine in diese ab Beginn der Materialumformung synchron zur Schließbewegung des Werkzeugs zunehmend eintauchende Umlenkrippe 14 am oberen Werkzeugteil 4 angeordnet, die einen das Fasermaterial 2 sickenförmig verformenden Durchzugsspalt 15 bilden, an welchem das Fasermaterial 2 zeitgleich mit der Umformung im umgekehrten Verhältnis zur örtlichen Profillänge gerafft wird, wie dies am deutlichsten aus den Fign. 2 und 3 ersichtlich ist, wonach der aus der Umlenkrippe 14 und der Aufnahmenut 13 bestehende Durchzugsspalt 15 im Bereich maximaler Profillänge, also bei dem gezeigten Ausführungsbeispiel am linken Ende der Formkavität, wo die Profillänge des Vorformlings 1 am größten ist, ausgespart ist und die Umlenkrippe 14 eine sich in Rippenlängsrichtung nach Maßgabe der örtlichen Abweichung von der maximalen Profillänge ändernde Eintauchtiefe besitzt.

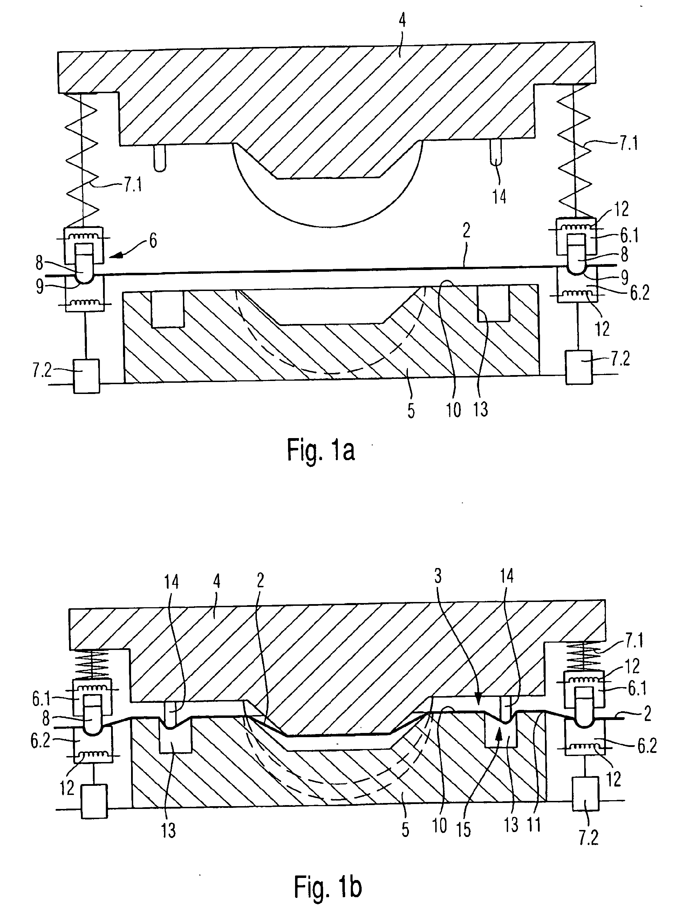

Um sicherzustellen, dass der Materialverbrauch im Durchzugsspalt 15 durch den formspaltseitigen Materialüberschuss gedeckt wird und nicht durch Fasermaterial, welches von Seiten des Spannrahmens 6 nachgezogen wird, ist die Umlenkrippe 14 in Richtung der spannrahmenseitigen Nutwand außermittig versetzt (Fig. 1 b), so dass das Fasermaterial 2 an dieser Stelle vermehrt geklemmt und daher bei der zunehmend sickenförmigen Verformung verstärkt vom formspaltseitigen Ende her in den Durchzugsspalt 15 gezogen wird.

Mit dem beschriebenen Umformwerkzeug und -verfahren lassen sich nahezu beliebig geformte Faserverbund-Vorformlinge herstellen, die dann in einem weiteren Fertigungsschritt, vorzugsweise im Wege des Harzinjektionsverfahrens, zu einem Strukturbauteil hoher Lastfestigkeit weiterverarbeitet werden.

## Patentansprüche

1. Verfahren zum Herstellen eines mehrdimensional profilierten Vorformlings (1) aus einem vorimprägnierten oder bindemittelvernetzten, multidirektionalen Faserverbundmaterial (2) mittels eines oberen und eines unteren, in der Schließlage einen dem Vorformling entsprechend profilierten Formspalt (3) zwischen sich begrenzenden Werkzeugteils (4, 5), wobei das Faserverbundmaterial beim Schließen der Werkzeugteile von Seiten eines diese umgreifenden Spannrahmens (6) unter Beibehalt der Spannkraft nachgezogen wird, **dadurch gekennzeichnet, dass**
das Faserverbundmaterial (2) zum Ausgleich des Materialüberschusses an den schwächer profilierten Formspaltbereichen ab Beginn der Materialumformung synchron zur Schließbewegung der Werkzeugteile (4, 5) in der Randbeschnittzone des Vorformlings (1) zwischen Formspalt (3) und Spannrahmen (6) in einem sickenförmigen Durchzugspalt zunehmend sickenförmig verformt wird.

2. Umformwerkzeug zum Herstellen eines mehrdimensional profilierten Vorformlings (1) aus einem vorimprägnierten oder bindemittelvernetzten, multidirektionalen Faserverbundmaterial (2), mit einem oberen und einem unteren, in der Schließlage einen dem Vorformling entsprechend profilierten Formspalt (3) zwischen sich begrenzenden Werkzeugteil (4, 5) sowie einem diese umgreifenden, das Faserverbundmaterial beim Schließen der Werkzeugteile reibschlüssig nachführbar fixierenden Spannrahmen (6), **dadurch gekennzeichnet, dass**
die Werkzeugteile (4, 5) zum Ausgleich des Materialüberschusses an den schwächer profilierten Formspaltbereichen mit in der Randbeschnittzone des Vorformlings (1) angeordneten, einen synchron zur Schließbewegung der Werkzeugteile ab Beginn der Materialumformung zunehmend sickenförmigen Durchzugsspalt (15) für das Faserverbundmaterial (2) zwischen sich begrenzenden Formstücken (13, 14) versehen sind.

3. Umformwerkzeug nach Anspruch 2, **dadurch gekennzeichnet, dass** der Durchzugsspalt (15) eine nach Maßgabe der örtlichen Profillängenunterschiede unterschiedliche Durchzugslänge aufweist.

4. Umformwerkzeug nach Anspruch 2 oder 3, **dadurch gekennzeichnet, dass** das Faserverbundmaterial (2) im Durchzugsspalt (15) mit einer ungleichförmigen, im spannrahmenseitigen Einlaufbereich des Durchzugsspalts größeren Rückhaltekraft als im formspaltseitigen Auslaufbereich beaufschlagt ist.

## Claims

1. A method for producing a multidimensional profiled preform (1) from a pre-impregnated or binder-crosslinked, multidirectional fibre composite material (2) by means of an upper and a lower mould part (4, 5) which, in the closed position, define therebetween a profiled forming gap (3) corresponding to the preform, wherein during closure of the mould parts, the fibre composite material is tightened by a tensioning frame (6) which encompasses said mould parts, while retaining the tensioning force, **characterised in that**
to compensate for the excess material in the weaker profiled forming gap regions, the fibre composite material (2) is increasingly deformed in the form of a bead in a bead-shaped draw-through gap in the edge trimming zone of the preform (1) between the forming gap (3) and the tensioning frame (6) synchronously with the closing movement of the mould parts (4, 5) from the start of the material forming procedure.

2. A forming tool for producing a multidimensional profiled preform (1) from a pre-impregnated or binder-crosslinked, multidirectional fibre composite material (2), having an upper and a lower mould part (4, 5) which, in the closed position, define therebetween a profiled forming gap (3) corresponding to the preform, as well as a tensioning frame (6) which encompasses the mould parts and fixes the fibre composite material during closure of the mould parts such that the fibre composite material can be subsequently fed in while being frictionally engaged, **characterised in that**,
to compensate for the excess material in the weaker profiled forming gap regions, the mould parts (4, 5) are provided with forming pieces (13, 14) which are arranged in the edge trimming zone of the preform (1) and define therebetween a draw-through gap (15), which becomes increasingly bead-shaped, for the fibre composite material (2) synchronously with the closure movement of the mould parts from the start of the forming procedure of the material.

3. A forming tool according to claim 2, **characterised in that** the draw-through gap (15) has a draw-through length which differs according to the local differences in profile length.

4. A forming tool according to claim 2 or claim 3, **characterised in that** the fibre composite material (2) is subjected in the draw-through gap (15) to a non-uniform retaining force which is greater in the inlet region of the draw-through gap on the tensioning frame side than in the outlet region on the forming gap side.

## Revendications

1. Procédé de fabrication d'une préforme profilée (1) à plus de deux dimensions en un matériau composite à base de fibres multidirectionnelles (2) pré-imprégné ou réticulé à l'aide d'un liant, au moyen d'une partie d'outil supérieure et d'une partie d'outil inférieure (4, 5) définissant entre elles dans la position de fermeture une fente de moulage profilée (3) correspondant à la préforme, selon lequel lors de la fermeture des parties d'outil le matériau composite à base de fibres est resserré par les côtés d'un cadre de serrage (6) entourant cette fente en conservant la force de serrage,
**caractérisé en ce que**
pour compenser l'excès de matériau dans les zones de la fente de moulage faiblement profilées, le matériau composite à base de fibres (2) est constamment déformé en forme de moulure dans une fente d'étirage en forme de moulure dans la zone de rognage de la préforme (1) entre la fente de moulage (3) et le cadre de serrage (6) à partir du début de la mise en forme du matériau, en synchronisme avec le mouvement de fermeture des parties d'outil (4, 5).

2. Outil de mise en forme destiné à permettre la fabrication d'une préforme profilée (1) à plus de deux dimensions en un matériau composite à base de fibres multidirectionnelles (2) préimprégné ou réticulé à l'aide d'un liant, comprenant une partie d'outil supérieure et une partie d'outil inférieure (4, 5) définissant entre elles dans la position de fermeture une fente de moulage profilée (3) correspondant à la préforme, ainsi qu'un cadre de serrage (6) entourant celle-ci et fixant le matériau composite à base de fibres de manière asservie par une liaison par friction lors de la fermeture des parties d'outil,
**caractérisé en ce que**
pour compenser l'excès de matériau dans les zones de la fente de moulage faiblement profilées, les parties d'outil (4, 5) sont équipées, entre des pièces de mise en forme contigües (13, 14) d'une fente d'étirage constant (15) du matériau composite à base de fibres (2), en forme de moulure à partir du début de la mise en forme de ce matériau, en synchronisme avec le mouvement de fermeture des parties d'outil située dans le zone de rognage de la préforme (1).

3. Outil de mise en forme conforme à la revendication 2,
**caractérisé en ce que**
la fente d'étirage (15) a une longueur d'étirage variable en fonction des différences de longueur de profilage locales.

4. Outil de mise en forme conforme à la revendication 2 ou 3, **caractérisé en ce que**
le matériau composite à base de fibres (2) est soumis dans la fente d'étirage (15) à une contrainte de retenue de forme inégale, plus importante dans la zone d'introduction dans cette fente située côté cadre de serrage que dans sa zone de sortie située côté fente d'étirage.
